# EUROPÄISCHE PATENTSCHRIFT

(11) **EP 2 987 704 B1**
(45) Veröffentlichungstag und Bekanntmachung des Hinweises auf die Patenterteilung: **01.07.2020**
(21) Anmeldenummer: 15001140.1
(22) Anmeldetag: 17.04.2015
(51) Int. Cl.: B62D 31/02, B60R 16/08, B60T 17/06

(54) **INSTALLATIONS-TRÄGER FÜR EIN KRAFTFAHRZEUG ZUM ANBAU VON EINEM LUFTDRUCKBEHÄLTERAGGREGAT**
INSTALLATION HOLDER FOR A MOTOR VEHICLE FOR MOUNTING OF AN AIR COMPRESSOR SET
SUPPORT D'INSTALLATION POUR UN VÉHICULE AUTOMOBILE POUR LE MONTAGE D'UN AGGRÉGAT DE COMPRESSEUR D'AIR

(30) Priorität: 22.08.2014 DE 102014012713
(43) Veröffentlichungstag der Anmeldung: 24.02.2016
(73) Patentinhaber: MAN Truck & Bus SE, 80995 München (DE)
(72) Erfinder: Rübsamen, Susanne, 80687 München (DE); Elbs, Norbert, 80639 München (DE); Jahn, Danilo, 80992a München (DE)
(74) Vertreter: v. Bezold & Partner Patentanwälte - PartG mbB

(56) Entgegenhaltungen:
- EP-A1- 0 736 445
- DE-A1-102004 038 487
- DE-A1-102013 000 112
- GB-A- 2 443 272
- US-B1- 6 520 494

## Beschreibung

Die Erfindung betrifft einen Installations-Träger zur Halterung an einem Kraftfahrzeug, vorzugsweise einem Nutzfahrzeug, insbesondere einem Lastkraftwagen oder einem Omnibus.

Nutzfahrzeuge, insbesondere Lastkraftwagen und Busse, besitzen üblicherweise eine Druckluftbremsanlage mit zwei oder mehreren unabhängigen Druckluftkreisen Über einen Kompressor am Motor der Nutzfahrzeuge werden Druckluftbehälter mit Luft gefüllt. Über Magnetventile kann Luft aus den Druckluftbehältern entnommen werden. Die Magnetventile steuern zudem die Bremszylinder. Äquivalent hierzu werden auch Ventile für die Luftfederung und Steuerungselemente für Getriebe, Reduktionsmittel (z. B. Harnstoff-WasserLösung) und Nebenverbraucher bedient.

Derzeit befinden sich die Aggregate, die die Druckluftbremsanlage, das Luft-Feder-Dämpfer-System und weitere Komponenten mit Luft versorgen, an unterschiedlichen Positionen verteilt im Lastkraftwagen (oder Bus) und haben folglich keinen Lastkraftwagen-übergreifenden festen Montageplatz. Dadurch wird insbesondere die Montage der Aggregate erschwert und zudem die Qualitätskontrolle der Aggregate, inklusive deren Zugänglichkeit.

Ein gattungsgemäßer Installations-Träger ist außerdem in dem Dokument DE 10 2013 000112 A1 offenbart.

Eine Aufgabe der Erfindung ist es, die Montage bzw. die Qualitätskontrolle einzelner Aggregate und/oder Komponenten an einem Kraftfahrzeug zu erleichtern. Eine weitere Aufgabe ist es, durch die kompakte und durchdachte Anordnung, Bauteile und Halter zu reduzieren und Gewicht im Kraftfahrzeug einzusparen.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft einen Installations-Träger, vorzugsweise einen Aggregate-Träger, zur Anordnung an einem Kraftfahrzeug, vorzugsweise einem Nutzfahrzeug, insbesondere einem Lastkraftwagen oder einem Omnibus.

Der Installations-Träger ist zur Montage verschiedener Kraftfahrzeug-Aggregate und/oder Kraftfahrzeug-Komponenten ausgeführt, die nachfolgend der Kürze wegen meist als Aggregate und/oder Komponenten bezeichnet werden.

Der Installations-Träger umfasst eine Befestigungseinrichtung zur zweckmäßig mittelbaren (indirekten) oder unmittelbaren (direkten) Halterung an dem Kraftfahrzeug, z. B. zur Halterung an einer Rahmentragstruktur des Kraftfahrzeugs. Alternativ oder ergänzend zur Befestigungseinrichtung kann der Installations-Träger zur zweckmäßig mittelbaren (indirekten) oder unmittelbaren (direkten) Montage an einer Rahmentragstruktur des Kraftfahrzeugs ausgeführt sein, um als mittragender Teil der Rahmentragstruktur zu wirken, z. B. um die Rahmentragstruktur zu verstärken, insbesondere auszusteifen.

Dadurch sind insbesondere Ausführungsformen umfasst, in denen der Installations-Träger unmittelbar an das Kraftfahrzeug, z. B. die Rahmentragstruktur, montierbar ist, aber auch insbesondere Ausführungsformen, in denen der Installations-Träger über eine Zwischenkonstruktion, z. B. die weiter unten erwähnte rahmenförmige Tragstruktur, an das Kraftfahrzeug, z. B. die Rahmentragstruktur, montierbar ist.

Die Rahmentragstruktur kann z. B. ein Fahrgestellrahmen, ein Chassis, ein Fahrzeugaufbau, ein Fahrzeuggerippe, zweckmäßig für einen Omnibus, und/oder eine andere tragende Struktur des Kraftfahrzeugs sein.

Der Installations-Träger kann an die Rahmentragstruktur bzw. allgemein an das Kraftfahrzeug z. B. angeschraubt, angenietet, angeschweißt oder anderweitig angebracht werden.

Der Installations-Träger ermöglicht eine konzentrierte und/oder geordnete Positionierung verschiedener Aggregate und/oder Komponenten am Kraftfahrzeug. Die Aggregate und/oder Komponenten können folglich an quasi einer Stelle zusammengefasst und gruppiert werden. Der Installation-Träger führt dadurch insbesondere zu einer einfachen Montage und Qualitätskontrolle, inklusive einer schnellen Zugänglichkeit der einzelnen Aggregate und/oder Komponenten.

Die Aggregate und/oder Komponenten können z. B. an dem Installations-Träger vormontiert werden und müssen nicht quasi einzeln an das Kraftfahrzeug montiert müssen, was zu einer einfachen, insbesondere schnellen Montage führt.

Der Installations-Träger erleichtert z. B. die Wartung, die Integration und/oder das Entfernen einzelner Aggregate und/oder Komponenten. Der Installations-Träger führt somit zu erhöhter Flexibilität und einem verbesserten Variantenmanagement des Kraftfahrzeugs. Der Installations-Träger ermöglicht auch eine organisierte Leitungs- und/oder Kabelführung für die Aggregate und/oder Komponenten.

In dem Installations-Träger der Erfindung können ausgewählte oder alle Druckluftaggregate des Kraftfahrzeugs an dem Installations-Träger montiert und somit konzentriert sein.

Der Installations-Träger der Erfindung ist als Installations-Platte (z. B. Installations-Wand etc.) ausgeführt und stellt somit ein zweckmäßig flächenförmiges Bauteil dar.

Der Installations-Träger der Erfindung weist zumindest ein Lochmuster zur Montage zumindest eines Aggregats und/oder zumindest einer Komponente auf.

Der Installations-Träger kann ferner zumindest eine Aussparung zur Aufnahme eines Aggregats und/oder einer Komponente aufweisen.

Darüber hinaus kann an dem Installations-Träger zumindest eine Befestigungskonstruktion zur Montage zumindest eines Aggregats und/oder zumindest einer Komponente anmontiert oder ausgebildet sein, so dass das Aggregat und/oder die Komponente zweckmäßig indirekt durch den eigentlichen Installations-Träger halterbar ist.

Der Installations-Träger kann z. B. ein Biege-Bauteil sein, vorzugsweise mit umgebogenen Randbereichen.

Die Dicke des Materials, aus dem die Installations-Platte und/oder das flächenförmige Bauteil hergestellt ist, ist vorzugsweise kleiner als 6 mm, 5 mm, 4 mm, 3 mm oder sogar 2 mm. Der Installations-Träger kann als Einzelteil ausgeführt sein oder alternativ als Träger-Kombination mit zumindest zwei nebeneinander oder übereinander anordbaren Trägerteilen. Der Installations-Träger kann kraftfahrzeugtyp-basiert ausgeführt sein oder ist durch modulares kombinieren einzelner Trägerteile an unterschiedliche Kraftfahrzeuge anpassbar.

Der Installationsträger ist vorzugsweise aus einem metallischen Werkstoff oder Kunststoff hergestellt.

Der Installations-Träger der Erfindung ist auch so, dass seitlich neben, in und/oder hinter dem Installations-Träger zumindest ein Drucklufttank angeordnet ist. Der Drucklufttank dient zur Versorgung einer Druckluftbremsanlage, einer Luft-Dämpfer-Einrichtung und/oder eines Nebenverbrauchers des Kraftfahrzeugs mit Druckluft.

Es ist möglich, dass der Drucklufttank mit einem an dem Installations-Träger montierten Aggregat und/oder einer an dem Installations-Träger montierten Komponente in Wirkverbindung steht.

Der Installations-Träger kann mit einer rahmenförmigen Tragstruktur (z. B. Hilfsrahmen und/oder Montagerahmen) versehen sein. Die rahmenförmige Tragstruktur kann den Installations-Träger tragwerkstechnisch verstärken, z. B. aussteifen, und/oder z. B. dazu dienen, den Installations-Träger an dem Kraftfahrzeug, insbesondere der Rahmentragstruktur zu haltern. Der Hilfsrahmen kann als Montagehilfe abseits der Montagestraße dienen.

Der Installations-Träger kann alternativ oder ergänzend zu der rahmenförmigen Tragstruktur auch anders verstärkt sein, z. B. durch Versteifungsrippen etc.

Der Installations-Träger ist vorzugsweise an der rahmenförmigen Tragstruktur montiert.

Es ist möglich, dass die rahmenförmige Tragstruktur seitlich von dem Installations-Träger absteht und/oder zur Montage zumindest eines Drucklufttanks dient.

Es ist möglich, dass an dem Installations-Träger die Aggregate und/oder Komponenten vormontiert sind.

Es ist möglich, dass der Träger mit zumindest einer Elektro-Schnittstelle versehen ist, über die zumindest ein Kraftfahrzeug-seitiges Elektro-Kabel mit zumindest einem Installations-Träger-seitigen Elektro-Kabel verbindbar ist. Alternativ oder ergänzend kann der Installations-Träger mit zumindest einer Fluid-Schnittstelle versehen sein, über die zumindest eine Kraftfahrzeug-seitige Druckluftleitung (z. B. ein Polyamid-Rohr) mit zumindest einer Installations-Träger-seitigen Druckluftleitung verbindbar ist. Die Schnittstellen können z. B. eine Dreh- und/oder Steckverbindung aufweisen.

Es ist möglich, dass der Installations-Träger zur Montage von zumindest einem von Folgenden ausgeführt ist, vorzugsweise zumindest eines von Folgenden an dem Installations-Träger montiert, zweckmäßig vormontiert ist: Aggregate für das Bremssystem des Kraftfahrzeugs, 4-Kreis-Schutzventil, Druckregelmodul für Vorder- und Hinterachse, Regelmodul für die Luftfederanlage des Kraftfahrzeugs, ein Anhängersteuerventil, ein Lufttrockner und/oder ein Kraftstofffilter.

Zu erwähnen ist, dass die Rahmentragstruktur im Rahmen der Erfindung z. B. ein Fahrgestellrahmen, ein Chassis, ein Fahrzeuggerippe, vorzugsweis für einen Omnibus, einen Fahrzeugaufbau und andere tragende Strukturen eines Kraftfahrzeugs umfasst.

Die Erfindung ist nicht auf einen Installations-Träger beschränkt, sondern umfasst auch ein Kraftfahrzeug, vorzugsweise ein Nutzfahrzeug, insbesondere einen Lastkraftwagen oder einen Omnibus, mit zumindest einem Installations-Träger wie hierin offenbart.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht eines Installations-Trägers gemäß einer Ausführungsform der Erfindung,
- Figur 2: zeigt eine perspektivische Ansicht zweier Installation-Träger gemäß einer anderen Ausführungsform der Erfindung,
- Figur 3: zeigt eine perspektivische Ansicht zweier Installations-Träger gemäß einer wiederum anderen Ausführungsform der Erfindung,
- Figur 4: zeigt eine schematische Ansicht eines Installations-Trägers gemäß einer Ausführungsform der Erfindung,
- Figur 5: zeigt eine schematische Ansicht eines Installations-Trägers gemäß einer anderen Ausführungsform der Erfindung und
- Figur 6: zeigt eine schematische Ansicht einer Schnittstellenkonfiguration für einen Installations-Träger gemäß einer Ausführungsform der Erfindung.

Die unter Bezugnahme auf die Figuren beschriebenen Ausführungsformen stimmen teilweise überein, sodass ähnliche oder identische Teile mit dem gleichen Bezugszeichen versehen sind und zu deren Erläuterung auch auf die Beschreibung der anderen Ausführungsformen verwiesen werden, um Wiederholungen zu vermeiden.

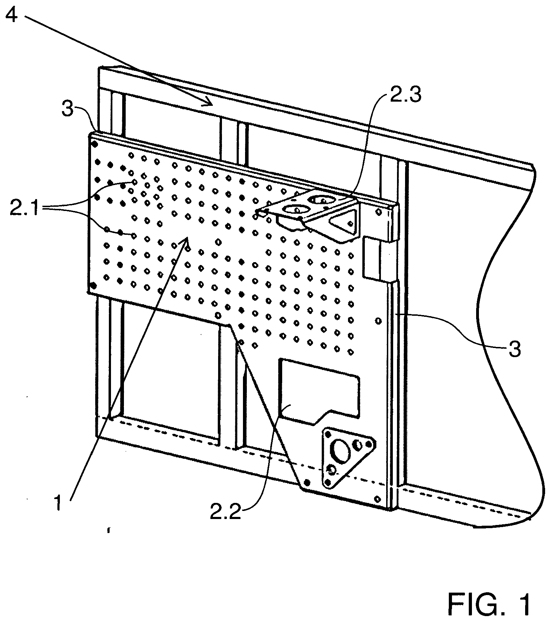

Figur 1 zeigt eine perspektivische Ansicht eines Installations-Trägers 1 für ein Kraftfahrzeug, vorzugsweise ein Nutzfahrzeug, insbesondere einen Lastkraftwagen oder einen Omnibus.

Der Installations-Träger 1 ist zur Montage verschiedener Kraftfahrzeug-Komponenten und Kraftfahrzeug-Aggregate (nachfolgend Komponenten und Aggregate genannt) ausgeführt und umfasst eine in Figur 1 nicht zu sehende Befestigungseinrichtung zur direkten oder indirekten Halterung an dem Kraftfahrzeug, z. B. einem Fahrgestellrahmen eines Nutzfahrzeugs. Der Installations-Träger 1 kann z. B. direkt an den Fahrgestellrahmen geschraubt, geschweißt, genietet, etc. werden oder über eine Zwischenkonstruktion (Haltesystem) indirekt daran gehaltert werden.

Der in Figur 1 gezeigte Installations-Träger 1 ist als Installations-Platte (Installations-Wand) ausgeführt und stellt folglich ein im Wesentlichen flächiges Bauteil dar.

Der Installations-Träger 1 ist insbesondere als ein Biege-Bauteil mit umgebogenen Randbereichen 3 ausgeführt, insbesondere ein sogenanntes Laser-Biege-Bauteil.

Der Installations-Träger 1 umfasst mehrere Lochmuster 2.1 zur Montage zumindest eines (Kraftfahrzeug-) Aggregats und/oder zumindest einer (Kraftfahrzeug-) Komponente. Der Übersichtlichkeit halber sind nur einige der Löcher des Lochmusters mit dem Bezugszeichen 2.1 versehen. Es ist möglich, dass mehrere voneinander separierte Lochmuster oder ein einheitliches Lochmuster vorhanden sind.

Der Installations-Träger 1 umfasst ferner eine Aussparung 2.2 zur Aufnahme eines Aggregats und/oder einer Komponente.

Der Installations-Träger 1 umfasst darüber hinaus eine Befestigungskonstruktion 2.3 zur Montage zumindest eines Aggregats und/oder zumindest einer Komponente.

Der Installations-Träger 1 ist mit einer rahmenförmigen Tragstruktur 4, z. B. einem Hilfs- oder Montagerahmen, versehen, der zur Verstärkung, insbesondere Aussteifung des Installations-Trägers 1 dient und alternativ oder ergänzend z. B. genutzt werden kann, um den Installation-Träger 1 am Kraftfahrzeug, insbesondere einem Fahrgestellrahmen, zu haltern.

In einer nicht gezeigten Ausführungsform der Erfindung ist es möglich, dass der InstallationsTräger 1, z. B. einschließlich der rahmenförmigen Tragstruktur 4, zur Montage an einen Fahrgestellrahmen des Kraftfahrzeugs ausgeführt ist, um als mittragender Teil des Fahrgestellrahmens zu wirken, so dass der Fahrgestellrahmen dadurch ausgesteift und verstärkt wird.

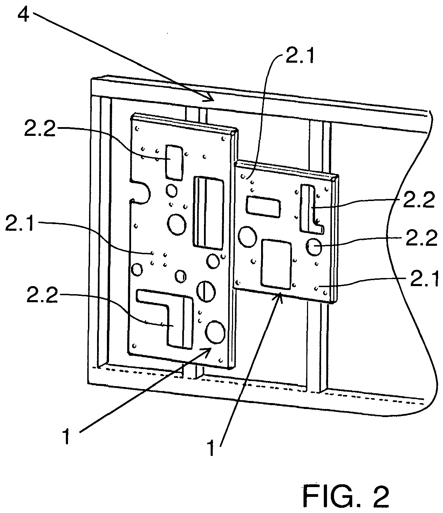

Figur 2 zeigt eine perspektivische Ansicht zweier Installations-Träger 1 gemäß einer Ausführungsform der Erfindung. Die zwei Installations-Träger 1 sind seitlich nebeneinander, einander kontaktierend angeordnet und bilden eine Träger-Kombination mit zwei Trägerteilen. Die zwei in Figur 2 gezeigten Installations-Träger 1 könnten auch durch einen einzigen, dementsprechend ausgeformten Installations-Trägers 1 ersetzt werden.

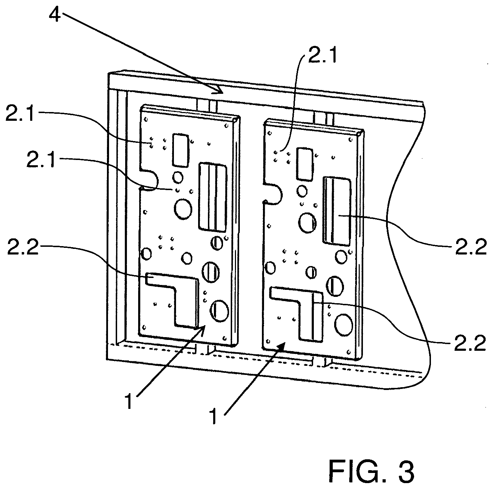

Figur 3 zeigt eine perspektivische Ansicht zweier Installations-Träger 1 gemäß einer anderen Ausführungsform der Erfindung. Die zwei Installations-Träger 1 sind seitlich nebeneinander, allerdings voneinander beabstandet angeordnet. Die zwei Installations-Träger 1 bilden eine Träger-Kombination aus zwei Trägerteilen.

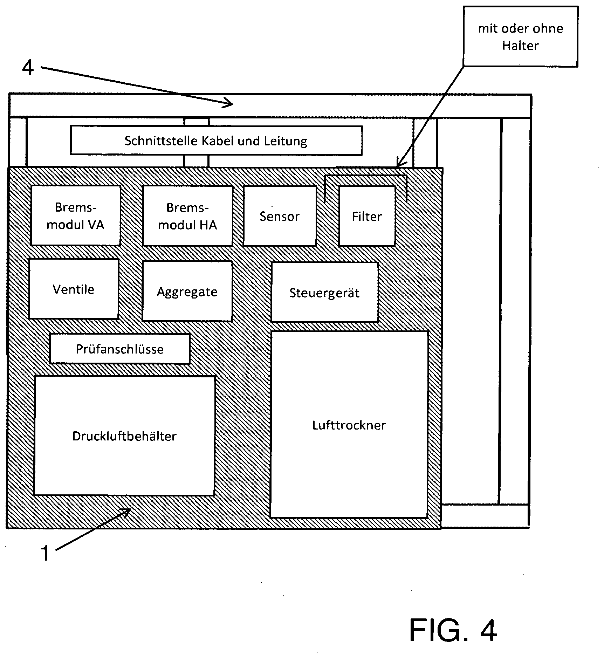

Figur 4 zeigt eine schematische Ansicht eines Installations-Trägers 1 gemäß einer Ausführungsform der Erfindung.

An dem Installations-Träger 1 sind folgende Teile montiert, vorzugsweise vormontiert:
Aggregate für das Bremssystem des Kraftfahrzeugs, z.B. 4-Kreis-Schutzventil, Druckregelmodul für Vorder- und Hinterachse, Regelmodul für die Luftfederanlage des Kraftfahrzeugs, ein Anhängersteuerventil, zumindest ein Steuergerät, verschiedene Prüfanschlüsse für das Druckluftsystem, zumindest ein Druckluftbehälter (Drucklufttank), ein Lufttrockner, ein Kraftstofffilter.

Darüber hinaus kann der Installations-Träger 1 mit einer Schnittstellenkonfiguration versehen werden, über die Kraftfahrzeug-seitige Kabel und/oder Leitungen mit Installations-Träger-seitigen Kabeln und/oder Leitungen verbindbar sind, zum Beispiel über Steck-, Dreh- und/oder andere geeignete Verbindungstechniken.

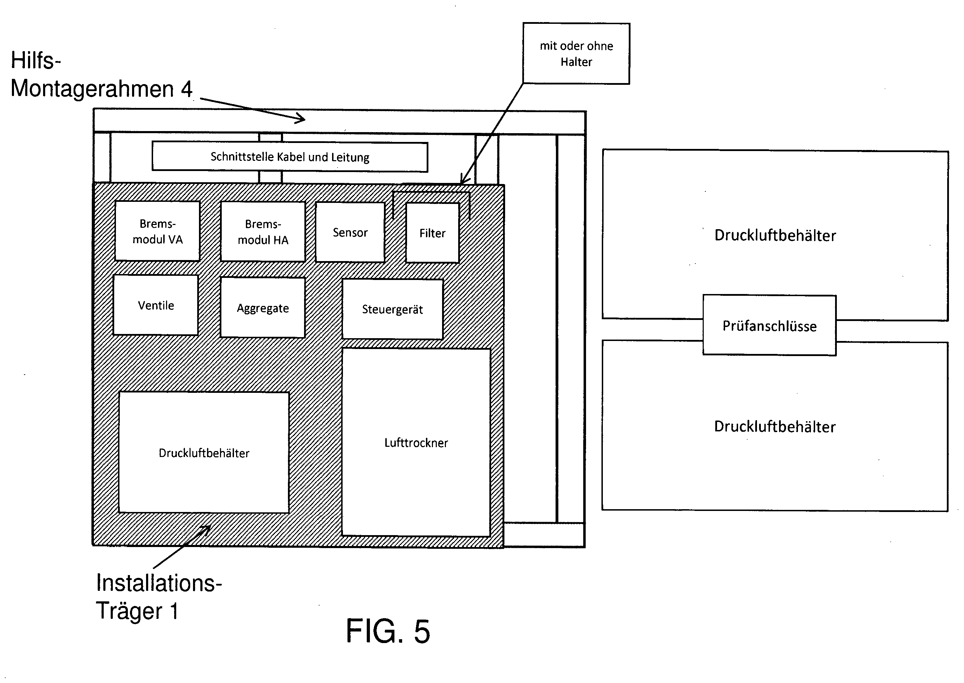

Figur 5 zeigt eine schematische Ansicht eines Installations-Trägers 1 gemäß einer wiederum anderen Ausführungsform der Erfindung.

Eine Besonderheit der in Figur 5 gezeigten Ausführungsform ist, dass seitlich neben dem Installations-Träger 1 zwei Druckluftbehälter mit Prüfanschlüssen angeordnet sind. Es ist möglich, dass die rahmenförmige Tragstruktur 4 seitlich von dem Installations-Träger 1 absteht und zur Montage der zwei Druckluftbehälter dient.

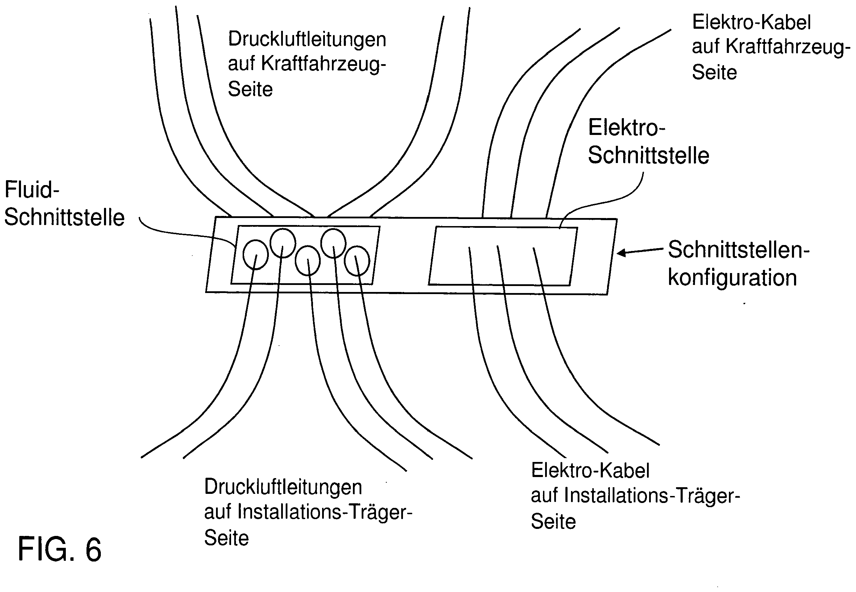

Figur 6 zeigt eine schematische Ansicht einer Schnittstellenkonfiguration für einen Installations-Träger 1 gemäß einer Ausführungsform der Erfindung.

Figur 6 zeigt eine Fluid-Schnittstelle, über die Kraftfahrzeug-seitige Druckluftleitungen (z. B. Rohre oder Schläuche) mit Installations-Träger seitigen Druckluftleitungen verbindbar sind, z. B. über Steck-, Dreh- und/oder andere geeignete Verbindungstechniken.

Figur 6 zeigt außerdem eine Elektro-Schnittstelle, über die Kraftfahrzeug-seitige Elektro-Kabel mit Installations-Träger seitigen Elektro-Kabeln verbindbar sind, ebenfalls z. B. über Steck-, Dreh- und/oder anderen geeignete Verbindungstechniken.

### Bezugszeichenliste

- 1: Installations-Träger, insbesondere Aggregate-Träger
- 2.1: Lochmuster
- 2.2: Aussparung
- 2.3: Befestigungskonstruktion
- 3: Umgebogener Randbereich
- 4: Rahmenförmige Tragstruktur

## Patentansprüche

1. Installations-Träger (1) für ein Kraftfahrzeug, vorzugsweise Lastkraftwagen oder Omnibus, wobei der Installations-Träger (1)
a) zur Montage mehrerer Kraftfahrzeug-Komponenten und/oder Kraftfahrzeug-Aggregate ausgeführt ist,
b) eine Befestigungseinrichtung zur Halterung an dem Kraftfahrzeug umfasst, und/oder
c) zur Montage an eine Rahmentragstruktur des Kraftfahrzeugs ausgeführt ist, um als mittragender Teil der Rahmentragstruktur zu wirken,
d) wobei seitlich neben, in und/oder hinter dem Installations-Träger (1) zumindest ein Drucklufttank angeordnet ist, und
e) wobei der zumindest eine Drucklufttank zur Versorgung einer Druckluftbremsanlage, einer Luft-Dämpfer-Einrichtung und/oder eines Nebenverbrauchers des Kraftfahrzeugs mit Druckluft dient,
**dadurch gekennzeichnet, dass**
f) der Installations-Träger (1) als Installations-Platte (1) und flächiges Bauteil ausgeführt ist, und
g) der Installations-Träger (1) zumindest ein Lochmuster (2.1) zur Montage zumindest eines Kraftfahrzeug-Aggregats und/oder zumindest einer Kraftfahrzeug-Komponente aufweist.

2. Installations-Träger (1) nach einem der vorhergehenden Ansprüche, wobei der Installations-Träger (1) zumindest eine Aussparung (2.2) zur Aufnahme eines Kraftfahrzeug-Aggregats und/oder einer Kraftfahrzeug-Komponente aufweist.

3. Installations-Träger (1) nach einem der vorhergehenden Ansprüche, wobei an dem Installation-Träger (1) zumindest eine Befestigungskonstruktion (2.3) zur Montage zumindest eines Kraftfahrzeug-Aggregats und/oder zumindest einer Kraftfahrzeug-Komponente anmontiert oder ausgebildet ist.

4. Installations-Träger (1) nach einem der vorhergehenden Ansprüche, wobei der Installations-Träger (1) ein Biege-Bauteil mit umgebogenen Randbereichen (3) und/oder ein Laser-Biege-Bauteil ist.

5. Installations-Träger (1) nach einem der vorhergehenden Ansprüche, wobei die Dicke des Materials, aus dem die Installations-Platte (1) und/oder das flächige Bauteil hergestellt ist, kleiner ist als 6mm; 5mm; 4mm; 3mm; oder 2mm.

6. Installations-Träger (1) nach einem der vorhergehenden Ansprüche, wobei der Installations-Träger (1) als Einzelteil ausgeführt ist oder als Träger-Kombination mit zumindest zwei nebeneinander oder übereinander anordbaren Trägerteilen.

7. Installations-Träger (1) nach einem der vorhergehenden Ansprüche, wobei der Installations-Träger (1) aus einem metallischen Werkstoff oder Kunststoff hergestellt ist.

8. Installations-Träger (1) nach einem der vorhergehenden Ansprüche, wobei der Installations-Träger (1) mit einer rahmenförmigen Tragstruktur (4) versehen ist und die rahmenförmige Tragstruktur (4) den Installations-Träger (1) verstärkt.

9. Installations-Träger (1) nach Anspruch 8, wobei die rahmenförmige Tragstruktur (4) seitlich von dem Installations-Träger (1) absteht und/oder zur Montage zumindest eines Drucklufttanks dient.

10. Installations-Träger (1) nach einem der vorhergehenden Ansprüche, wobei die Kraftfahrzeug-Aggregate und/oder Kraftfahrzeug-Komponenten an dem Installations-Träger (1) vormontiert sind.

11. Installations-Träger (1) nach einem der vorhergehenden Ansprüche, wobei der Installations-Träger (1) mit
a) einer Elektro-Schnittstelle versehen ist, über die zumindest ein Kraftfahrzeug-seitiges Kabel mit zumindest einem Installation-Träger-seitigen Kabel verbindbar ist, und/oder
b) einer Fluid-Schnittstelle versehen ist, über die zumindest eine Kraftfahrzeug-seitige Druckluftleitung mit zumindest einer Installation-Träger-seitigen Druckluftleitung verbindbar ist.

12. Installations-Träger (1) nach Anspruch 11, wobei die zumindest eine Schnittstelle zumindest eine Steck- und/oder Drehverbindung aufweist.

13. Installation-Träger (1) nach einem der vorhergehenden Ansprüche, wobei der Installations-Träger (1) zur Montage von zumindest einem von folgenden ausgeführt ist:
- Aggregate für das Bremssystem des Kraftfahrzeugs
- Anhängersteuermodul
- Lufttrockner
- Kraftstofffilter
- 4-Kreis-Schutzventil
- Druckregelmodul für ein Bremssystem des Kraftfahrzeugs
- Regelmodul für eine Luftfederanlage des Kraftfahrzeugs

14. Kraftfahrzeug, vorzugsweise Lastkraftwagen oder Omnibus, mit zumindest einem Installations-Träger (1) nach einem der vorhergehenden Ansprüche.

## Claims

1. An installation support (1) for a motor vehicle, preferably a motor truck or a motor bus, wherein the installation support (1)
a) is embodied for assembling a plurality of motor vehicle components and/or motor vehicle apparatuses;
b) comprises a fastening installation for mounting on the motor vehicle; and/or
c) is embodied for assembling on a frame structure of the motor vehicle so as to act as a participating structural part of the frame structure;
d) wherein at least one compressed air tank is disposed laterally beside, in and/or behind the installation support (1); and
e) wherein the at least one compressed air tank serves for supplying a pressure air brake system, an air damping installation, and/or an auxiliary consumer of the motor truck with compressed air;
**characterized in that**
f) the installation support (1) is embodied as an installation plate (1) and a planar component; and
g) the installation support (1) has at least one hole pattern (2.1) for assembling at least one motor vehicle apparatus and/or at least one motor vehicle component.

2. The installation support (1) according to one of the preceding claims, wherein the installation support (1) has at least one recess (2.2) for receiving a motor vehicle apparatus and/or a motor vehicle component.

3. The installation support (1) according to one of the preceding claims, wherein at least one fastening construction (2.3) for assembling at least one motor vehicle apparatus and/or at least one motor vehicle component is assembled or configured on the installation support (1).

4. The installation support (1) according to one of the preceding claims, wherein the installation support (1) is a bent component having folded peripheral regions (3), and/or a laser-bent component.

5. The installation support (1) according to one of the preceding claims, wherein the thickness of the material from which the installation plate (1) and/or the planar component are/is produced is less than 6 mm, 5 mm, 4 mm, 3 mm, or 2 mm.

6. The installation support (1) according to one of the preceding claims, wherein the installation support (1) is embodied as a single part or as a combined support having at least two support parts which are able to be disposed beside or on top of one another.

7. The installation support (1) according to one of the preceding claims, wherein the installation support (1) is produced from a metallic material or a plastics material.

8. The installation support (1) according to one of the preceding claims, wherein the installation support (1) is provided with a frame-shaped support structure (4) and the frame-shaped support structure (4) reinforces the installation support (1).

9. The installation support (1) according to Claim 8, wherein the frame-shaped structure (4) projects laterally from the installation support (1) and/or serves for assembling at least one compressed air vessel.

10. The installation support (1) according to one of the preceding claims, wherein the motor vehicle apparatuses and/or motor vehicle components are pre-assembled on the installation support (1).

11. The installation support (1) according to one of the preceding claims, wherein the installation support (1) is
a) provided with an electrical interface by way of which at least one cable on the motor vehicle is able to be connected to at least one cable on the installation support; and/or
b) provided with a fluidic interface by way of which at least one compressed air line on the motor vehicle is able to be connected to at least one compressed air line on the installation support.

12. The installation support (1) according to Claim 11, wherein the at least one interface has at least one plug connection and/or rotary connection.

13. The installation support (1) according to one of the preceding claims, wherein the installation support (1) is embodied for assembling at least one of the following apparatuses:
- apparatuses for the brake system of the motor vehicle;
- a trailer control module;
- an air dehydrator;
- a fuel filter;
- a four-way protection valve;
- a pressure control module for a brake system of the motor vehicle;
- a regulator module for an air suspension system of the motor vehicle.

14. A motor vehicle, preferably a motor truck or a motor bus, having at least one installation support (1) according to one of the preceding claims.

## Revendications

1. Support d'installation (1) pour un véhicule automobile, de préférence un véhicule poids-lourd ou un omnibus, le support d'installation (1)
a) étant réalisé pour le montage de plusieurs composants du véhicule automobile et/ou groupes du véhicule automobile,
b) comprenant un dispositif de fixation pour la fixation au véhicule automobile, et/ou
c) étant réalisé pour le montage sur une structure de support de châssis du véhicule automobile, afin d'agir en tant que partie porteuse de la structure de support de châssis,
d) au moins un réservoir d'air comprimé étant disposé latéralement à côté, dans et/ou derrière le support d'installation (1), et
e) l'au moins un réservoir d'air comprimé servant à alimenter en air comprimé une installation de freinage à air comprimé, un dispositif d'amortissement pneumatique et/ou un consommateur auxiliaire du véhicule automobile,
**caractérisé en ce que**
f) le support d'installation (1) est réalisé sous forme de plaque d'installation (1) et de composant plat, et
g) le support d'installation (1) présente au moins un motif perforé (2.1) pour le montage d'au moins un groupe du véhicule automobile et/ou d'au moins un composant du véhicule automobile.

2. Support d'installation (1) selon l'une quelconque des revendications précédentes, le support d'installation (1) présentant au moins un évidement (2.2) pour recevoir un groupe du véhicule automobile et/ou un composant du véhicule automobile.

3. Support d'installation (1) selon l'une quelconque des revendications précédentes, dans lequel au moins une construction de fixation (2.3) pour le montage d'au moins un groupe du véhicule automobile et/ou d'au moins un composant du véhicule automobile est raccordée ou réalisée au niveau du support d'installation (1).

4. Support d'installation (1) selon l'une quelconque des revendications précédentes, le support d'installation (1) étant un composant cintré avec des régions de bord recourbées (3) et/ou un composant cintré découpé au laser.

5. Support d'installation (1) selon l'une quelconque des revendications précédentes, dans lequel l'épaisseur du matériau à partir duquel est fabriquée la plaque d'installation (1) et/ou le composant plat, est inférieure à 6 mm, 5 mm, 4 mm, 3 mm ou 2 mm.

6. Support d'installation (1) selon l'une quelconque des revendications précédentes, le support d'installation (1) étant réalisé sous forme de pièce individuelle ou sous forme de combinaison de support avec au moins deux pièces de support pouvant être disposées l'une à côté de l'autre ou l'une au-dessus de l'autre.

7. Support d'installation (1) selon l'une quelconque des revendications précédentes, le support d'installation (1) étant fabriqué en un matériau métallique ou en plastique.

8. Support d'installation (1) selon l'une quelconque des revendications précédentes, le support d'installation (1) étant pourvu d'une structure porteuse en forme de cadre (4) et la structure porteuse en forme de cadre (4) renforçant le support d'installation (1).

9. Support d'installation (1) selon la revendication 8, dans lequel la structure porteuse en forme de cadre (4) dépasse latéralement du support d'installation (1) et/ou sert au montage d'au moins un réservoir d'air comprimé.

10. Support d'installation (1) selon l'une quelconque des revendications précédentes, dans lequel les groupes du véhicule automobile et/ou les composants du véhicule automobile sont prémontés sur le support d'installation (1).

11. Support d'installation (1) selon l'une quelconque des revendications précédentes, le support d'installation (1)
a) étant pourvu d'une interface électrique par le biais de laquelle au moins un câble du côté du véhicule automobile peut être connecté à au moins un câble du côté du support d'installation, et/ou
b) étant pourvu d'une interface fluidique par le biais de laquelle au moins une conduite d'air comprimé du côté du véhicule automobile peut être connectée à au moins une conduite d'air comprimé du côté du support d'installation.

12. Support d'installation (1) selon la revendication 11, dans lequel l'au moins une interface présente au moins une connexion par enfichage et/ou rotative.

13. Support d'installation (1) selon l'une quelconque des revendications précédentes, le support d'installation (1) étant réalisé pour le montage d'au moins l'un des éléments suivants :
- des groupes pour le système de freinage du véhicule automobile
- un module de commande de remorque
- un sécheur d'air
- un filtre à carburant
- une vanne de protection à 4 circuits
- un module de régulation de pression pour un système de freinage du véhicule automobile
- un module de régulation pour une installation de ressort pneumatique du véhicule automobile.

14. Véhicule automobile, de préférence véhicule poids-lourd ou omnibus, comprenant au moins un support d'installation (1) selon l'une quelconque des revendications précédentes.
